# EUROPEAN PATENT SPECIFICATION

(11) **EP 2 870 610 B1**
(45) Date of publication and mention of the grant of the patent: **05.09.2018**
(21) Application number: 13812561.2
(22) Date of filing: 04.07.2013
(51) Int. Cl.: H01B 7/04, H01B 7/42, H01B 3/44, H01B 3/30, H01B 1/02, H02G 9/12, E21B 17/20

(54) **HEAT DISSIPATION IN A POWER CABLE OR A POWER UMBILICAL**
WÄRMEABLEITUNG IN EINEM STROMKABEL ODER EINEM VERSORGUNGSSCHLAUCH
DISSIPATION THERMIQUE DANS UN CÂBLE DE PUISSANCE OU UN OMBILICAL DE PUISSANCE

(30) Priority: 04.07.2012 NO 20120777
(43) Date of publication of application: 13.05.2015
(73) Proprietor: Aker Solutions AS, 1325 Lysaker (NO)
(72) Inventor: DUNSERUD, Jan Ole, 1182 Oslo (NO)
(74) Representative: Protector IP Consultants AS
(86) International application number: PCT/NO2013/000030
(87) International publication number: WO 2014/007643

(56) References cited:
- EP-A2- 0 562 331
- WO-A1-01/16515
- WO-A1-2011/065842
- WO-A1-2012/079631
- WO-A1-2013/125962
- SE-B- 394 919
- US-A- 4 532 374
- US-A- 5 828 007
- US-A1- 2005 208 301
- US-A1- 2007 267 717
- US-A1- 2010 096 161
- US-A1- 2012 199 390

## Description

The present invention relates to a specially designed DEH power cable, or a power umbilical, in order to obtain substantial heat dissipation in such a DEH power cable or power umbilical, which in the following text is referred to by the general term "power umbilical".
From WO 2011/065842 one kind of a power umbilical is known which is not concerned about dissipation of heat. Another prior art cable construction is known from US 4532374 A.
Heat dissipation, or cooling, is required for cables, risers, bundles, pipe/ cables bundles, all longitudinal products with embedded power cables that generate heat due to surrounding thermal insulation, stagnant hot air, trenched cables in mud or sand, heat from flowlines or other process activity. As known per se, water can be used as cooling agent, but other fluids, like antifreeze coolants, are conceivable if desired or necessary due to a particular use or circumstance. The water may be especially treated or cleaned process water. This application, however, provides additionally means to obtain increased heat dissipation and thereby improved cooling, either it being used alone, or been used in addition to such fluid cooling. Such cooling fluid can be injected or circulated by a feeding device or it may be naturally flowing due to e.g. temperature differences and/or gravity. Since cooling fluid can be used in combination with the present invention, a description and reference thereto is included.

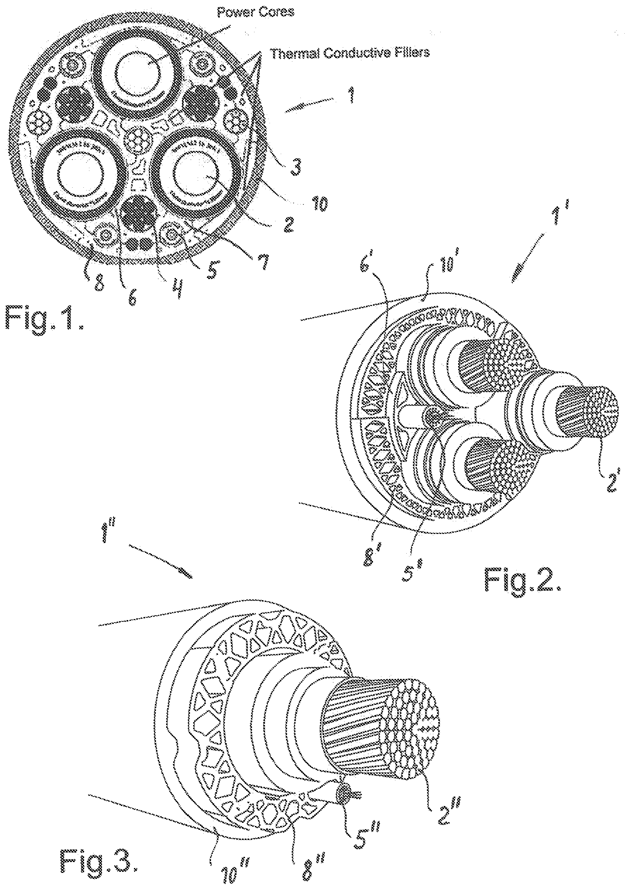

A cooling effect may also be achieved by means of a heat pipe based on a sealed metal pipe or tube as a heat transfer device.
An example when cooling becomes necessary is described in the following section. A cable experiencing temperatures above what the materials in the cable can withstand needs to be cooled. By injecting cooling fluid trough the structure in defined channels, the temperature will fall. In a typical incident, the temperature will fall with approx. 25° C. With temperatures close to 90° C, it is of vital importance to cool the cable. The cable insulation materials that are used are normally PEX Cross Linked PE. The design limit temperature for this material is 90° C. If the cable is too warm, lowering of the temperature by 5, 10 or 15 degrees from the design limit will at least double the service life of the cable.
When it comes to power umbilicals, sometimes just called power cables, like DEH cables (Direct Electric Heating) and riser designs, the DEH cables are in most cases supplied with electric power by a dynamic power cable from the topside power supply, and connected subsea to a power cable. Experiences show that the worst case regarding temperature conditions for the cables occurs in the region where the riser is above the sea water. The riser may be located inside a steel tube which increases the heat in the cable. The "traditional design" requires large conductor cross sections (1600mm²) in order to keep the cable temperature below the limit of 90° C, which is the limit for the cable insulation XLPE. To supply three pipeline sections with the traditional design, six cable conductors are required. An alternative solution is to supply these sections with one four core and one two core riser cable. The maximum temperature occurs in the riser with four cores. Computations have been carried out given a current of 1430 A, which is required for heating a pipeline with a U-value of 2.5 Wm²K. The temperature plot for this configuration is shown in fig. 1. As seen in the figure, the temperature limit of 90° C is exceeded.
One possible solution, as previously suggested in PCT/NO2013/050033, is to reduce the temperature by using water, or another type of cooling agent, in order to cool down the inside of a riser. Fig. 2 shows a solution with water cooling supplying 20° C water in two 16mm in diameter pipes close to the center of the umbilical. With such a water cooling arrangement the maximum temperature is reduced to 70° C, which is well below the 90° C limit of the cable.

In more detail, according to claim 1, the present invention relates to a DEH power cable, or power umbilical, comprising a number of electric cables for transfer of large quantities of electric power/energy; filler material in the form of stiff elongate polymer elements located at least partially around and between the number of electric cables, the number of electric cables and stiff elongate polymer elements being gathered in a twisted bundle by means of a laying operation; a protective sheath that encompasses the electric cables and the filler material; and at least one load carrying element at a predetermined location in the cross section of the DEH power cable /power umbilical.

The number of electric cables, the stiff elongate polymer elements and the at least one load carrying element, are either laid in a continuous helix, or alternately laid by continuously alternating direction, in the entire or part of the longitudinal extension of the DEH power cable /power umbilical to form a bundle.

According to the present invention an arrangement of the introductory said kind is provided, which arrangement is distinguished in that each stiff elongate polymer filler element is manufactured of said polymer material, which polymer material has been added at least one constituent that transforms the filler material to be substantially more heat conducting and heat dissipating.
In some embodiments of the invention, the said polymer material may be limited to a plastic material.
The base polymer filler material may be either one of polyethylene (PE), polyvinylchloride (PVC), polypropylene (PP) and acrylonitrile butadiene styrene (ABS). One can also imagine a combination of such filler materials.

In one embodiment the base filler material can for instance be polyvinylchloride (PVC) and the added constituents is for instance Boron-Nitride in the range of 3-15 weight %. In such an embodiment, the Boron-Nitride constituents could also be in the range of 1-40 weight %. Other combinations of filler materials and other types of added constituents are however also possible.
In another embodiment the added constituent can be Aluminium Nitride in the range of 1-40 weight %.

In still another embodiment the added constituent can be Carbon nano pipes in the range of 1-3 weight %, either alone or together with any of the other constituents.

In yet another embodiment the added constituent can be graphene in the range of 0.3 - 3 weight %, either alone or together with any of the other constituents.
Further, in another embodiment, at least one longitudinally extending channel is provided for forced flow transportation of a cooling agent through said power cable/umbilical in order to additionally cool down the electric cables and their insulation material from a critical temperature value of about 90°C.
In another embodiment, the channels further include gaps, slits or any openings, extending transversally and/or longitudinally in said power cable/umbilical, said channels, gaps and slits enable flooding of the internals of said power cable/umbilical, which flooding enables heat transfer from the electric cables to the cooling agent for evacuation of said heat.
In still another embodiment, the at least one longitudinally extending channel is terminating on board a vessel at an umbilical hangoff point comprising cooling agent tubes connecting with said one or more channels for transfer of said agent under pressure.
Further, the at least one longitudinally extending channels may be provided with draining holes through the outer sheath and communicating with said channels, which in turn communicate the cooling agent into the sea.
Preferably, the cooling agent is pure water, especially treated water or cleaned process water.

The cooling length of the DEH power cable /power umbilical may vary and can extend over a length such as 50 - 200 meters, where one crucial length regarding heat build up is in the section of open air from the umbilical hangoff point to the sea surface.

The DEH power cable, or power umbilical, may in one embodiment include at least one fluid pipe in the cross section, made of metal and/or plastic material.
In one embodiment, the filler material and the added constituent are continuously mixed together during production of the power cable or power umbilical. In such an embodiment one does not need to mix the filler and constituent in advance. Moreover one is able to adjust the weight-% of the respective components arbitrarily during production, according to requirements for the umbilical in question.
Other and further objects, features and advantages will appear from the following description of preferred embodiments of the invention, which is given for the purpose of description, and given in context with the appended drawings where:
Fig. 1 shows a typical transverse cross sectional view of a power cable having three power conductors,
Fig. 2 shows another typical transverse cross sectional view of a power cable having three power conductors, and
Fig. 3 shows a typical transverse cross sectional view of a variant of a power cable having one power conductor only.

Reference is firstly made to fig. 1 showing a DEH power cable 1, also called a power umbilical by persons versed in the art. The DEH power cable 1 has three power conductor cores 2 of substantial transversal cross section which are designed to transfer large quantities of electric power. The three power conductor cores 2 are normally made of copper, but aluminum or other conductive materials are also conceivable.

Further elements in the cross section can be load carrying elements 3 and weight elements 4, in addition to optical conductors 5. Finally there is a bundle of filler elements 6, 7 and 8. The filler elements are typically stiff elongate polymer elements, also called channel elements which are located at least partially around and between the electric power conductors 2, the load carrying elements 3, the weight elements 4 and the optical conductors 5. In the depicted version there are three inner channel elements 6, three intermediate channel elements 7 and six outer channel elements 8. The six outer channel elements 8 are three of each type having different cross section but are designed to fit into each other along their longitudinal edges.
Each of these stiff elongate polymer filler elements manufactured of this polymer material, has been added at least one constituent that transforms the filler material to be substantially more heat conducting and heat dissipating. Such base polymer filler material is typically either one of polyethylene (PE), polyvinylchloride (PVC), polypropylene (PP) or acrylonitrile butadiene styrene (ABS). The added constituent can be Boron Nitride in the range of 1-40 weight %. Another added constituent can be Aluminium Nitride in the range of 1-40 weight %. Another added constituent can be Carbon nano pipes in the range of 1-3 weight %.

As an example only, the DEH cable 1 having three heavy gauge conductors 2, each having a transversal cross section area of 1600mm², an outer diameter of 72,5mm and a capacity of 6/10 kV.

The channel elements 6, 7, 8 may have cooling fluid channels provided in their profile.
All these elements are gathered in a twisted bundle that was made by means of a laying and closing operation in a per se known manner. A protective sheath 10 encompasses the entire bundle of the above listed elements.

Reference is now made to fig. 2 showing a simpler DEH power cable 1'. The DEH power cable 1' still has three power conductor cores 2' of substantial transversal cross section which are designed to transfer large quantities of electric power. The three power conductor cores 2' are, as before, normally made of copper, but aluminum or other conductive materials are also conceivable.
Further elements in the cross section are one or more optical conductors 5'. Further there is a bundle of filler elements 6' and 8'. The filler elements are typically stiff elongate polymer elements, also called channel elements. In the depicted version there are three inner channel elements 6' and three outer channel elements 8'.

Reference is now made to fig. 3 showing a still simpler DEH power cable 1". The DEH power cable 1" has only one power conductor core 2" of substantial transversal cross section which are designed to transfer large quantities of electric power. The single power conductor core 2" is, as before, normally made of copper, but aluminum or other conductive materials are also conceivable.
Further elements in the cross section are one or more optical conductors 5". Further there are three circumferentially extending filler elements and 8". The filler elements are typically stiff elongate polymer elements, also called channel elements.

### Temperature challenges and cable design

One of the most important parameters in DEHC (Direct Electric Heating Cable) design is the temperature. The temperature of the cable varies trough the different operational conditions trough different parts of the system, from topside I-tube, bend stiffener, trench along the flowline etc. High voltage (HV) cables can be subjected to high temperatures and seawater in these areas. Such conditions can limit the electrical and mechanical lifetime of the polymer materials used in the cable design. The cable temperature should be kept well below the limit of 90° C by choosing a sufficient cable conductor cross section to improve the service life.

A DEHC consists of an insulation system (semi-conductive insulation screens and an insulating material, typically cross-linked polyethylene: XLPE. In addition, in order to prevent water flowing longitudinally (e.g. after a cable service failure) in the conductor, a semi-conductive sealing material are filled in between the strands.

The DEHC design needs some modifications to the traditional HV cable design since the water barrier in such a traditional cable is made of metallic materials which will have negative effect on the heating effect. The DEHC has therefore got a wet design.

## Claims

1. A DEH cable (1), or power umbilical, comprising:
a number of electric cables for transfer of large quantities of electric power/energy;
filler material in the form of stiff elongate polymer elements (6, 7, 8) located at least partially around and between the number of electric cables, the number of electric cables and stiff elongate polymer elements (6, 7, 8) being gathered in a twisted bundle by means of a laying operation;
a protective sheath (10) that encompasses the electric cables and the filler material; and
at least one load carrying element (3) at a predetermined location in the cross section of the DEH power cable /power umbilical (1),
the number of electric cables, the stiff elongate polymer elements and the at least one load carrying element, are either laid in a continuous helix, or alternately laid by continuously alternating direction, in the entire or part of the longitudinal extension of the DEH power cable /power umbilical to form a bundle, and
**characterized in that** each stiff elongate polymer filler element (6, 7, 8) is manufactured of said polymer material, which polymer material has been added at least one constituent that transforms the filler material to be substantially more heat conducting and heat dissipating.

2. The DEH power cable, or power umbilical, according to claim 1, **characterized in that** the base polymer filler material is either one of polyethylene (PE), polyvinylchloride (PVC), polypropylene (PP) and acrylonitrile butadiene styrene (ABS).

3. The DEH power cable, or power umbilical, according to claim 1 or 2, **characterized in that** the added constituent is Boron Nitride in the range of 1-40 weight %.

4. The DEH power cable, or power umbilical, according to claim 1 or 2, **characterized in that** the added constituent is Aluminium Nitride in the range of 1-40 weight %.

5. The DEH power cable, or power umbilical, according to any of the claims 1-4, **characterized in that** the added constituent is Carbon nano pipes in the range of 1-3 weight %.

6. The DEH power cable, or power umbilical, according to one of the preceding claims, **characterized in that** the filler material and the added constituent are mixed continuously and incorporated into the DEH power cable (1) or power umbilical during production of the same.

7. The DEH power cable, or power umbilical, according to any of the claims 1-6, **characterized in that** at least one longitudinally extending channel is provided for forced flow transportation of a cooling agent through said DEH power /power umbilical in order to additionally cool down the electric cables and their insulation material from a critical temperature value of about 90°C.

8. The DEH power cable, or power umbilical, according to claim 7, **characterized in that** the channels further include gaps, slits or any openings, transversally and/or longitudinally extending in said DEH power cable /power umbilical said channels, gaps and slits enable flooding of the internals of said DEH power cable /power umbilical which flooding enables heat transfer from the electric cables to the cooling agent for evacuation of said heat.

9. The DEH power cable, or power umbilical, according to claim 7, **characterized in that** the at least one longitudinally extending channels are terminating on board a vessel at an umbilical hangoff point comprising cooling agent tubes connecting with said channels for transfer of said agent under pressure.

10. The DEH power cable, or power umbilical, according to claim 7, **characterized in that** the at least one longitudinally extending channel is provided with draining holes through the outer sheath and communicating with said channels, which communicate the cooling agent into the sea.

11. The DEH power cable, or power umbilical, according to claim 7, **characterized in that** the cooling agent is water.

12. The DEH power cable, or power umbilical, according to claim 7, **characterized in that** the cooling length of the DEH power cable /power umbilical extends over a length of 50 - 200 meters, where one crucial length is in open air from the umbilical hangoff point to the sea surface.

13. The DEH power cable, or power umbilical, according to claim 7, **characterized in that** the DEH power cable /power umbilical comprises at least one fluid pipe in the cross section, of metal and/or plastic material.

## Patentansprüche

1. DEH-Kabel (1) oder Stromversorgungsschlauch, Folgendes aufweisend:
eine Anzahl von elektrischen Kabeln zur Übertragung großer Mengen an elektrischem Strom/Energie;
Füllmaterial in der Form starrer länglicher Polymerelemente (6, 7, 8), die mindestens zum Teil um die und zwischen der Anzahl von elektrischen Kabeln angeordnet sind, wobei die Anzahl von elektrischen Kabeln und starren länglichen Polymerelementen (6, 7, 8) mittels Legevorgängen in einem verdrillten Bündel gesammelt ist; eine Schutzhülle (10), die die elektrischen Kabel und das Füllmaterial einschließt; und
mindestens ein lasttragendes Element (3) an einer vorgegebenen Stelle im Querschnitt des DEH-Stromkabels/Stromversorgungsschlauchs (1),
wobei die Anzahl elektrischer Kabel, der starren länglichen Polymerelemente und des mindestens einen lasttragenden Elements entweder in einer Endlosspirale oder durch kontinuierlichen Richtungswechsel abwechselnd in dem gesamten oder einem Teil der Längserstreckung des DEH-Stromkabels/Stromversorgungsschlauchs unter Bildung eines Bündels gelegt ist, und
**dadurch gekennzeichnet, dass** jedes starre längliche polymere Füllelement (6, 7, 8) aus dem Polymermaterial hergestellt ist, welchem Polymermaterial mindestens ein Bestandteil zugesetzt worden ist, der das Füllmaterial umwandelt, um im Wesentlichen wärmeleitfähiger und stärker wärmeabführend zu sein.

2. DEH-Stromkabel, oder Stromversorgungsschlauch, nach Anspruch 1, **dadurch gekennzeichnet, dass** das polymere Basisfüllmaterial aus Polyethylen (PE), Polyvinylchlorid (PVC), Polypropylen (PP) und Acrylnitril-Butadien-Styrol (ABS) ausgewählt ist.

3. DEH-Stromkabel, oder Stromversorgungsschlauch, nach Anspruch 1 oder 2, **dadurch gekennzeichnet, dass** der zugesetzte Bestandteil Bornitrid im Bereich von 1-40 Gew.-% ist.

4. DEH-Stromkabel, oder Stromversorgungsschlauch, nach Anspruch 1 oder 2, **dadurch gekennzeichnet, dass** der zugesetzte Bestandteil Aluminiumnitrid im Bereich von 1-40 Gew.-% ist.

5. DEH-Stromkabel, oder Stromversorgungsschlauch, nach einem der Ansprüche 1-4, **dadurch gekennzeichnet, dass** es sich bei dem zugesetzten Bestandteil um Kohlenstoff-Nanoröhrchen im Bereich von 1-3 Gew.-% handelt.

6. DEH-Stromkabel, oder Stromversorgungsschlauch, nach einem der vorangehenden Ansprüche, **dadurch gekennzeichnet, dass** das Füllmaterial und der zugesetzte Bestandteil kontinuierlich gemischt und in das DEH-Stromkabel (1) oder den Stromversorgungsschlauch während der Herstellung desselben eingearbeitet sind.

7. DEH-Stromkabel, oder Stromversorgungsschlauch, nach einem der Ansprüche 1-6, **dadurch gekennzeichnet, dass** mindestens ein sich längs erstreckender Kanal zum erzwungenen Durchfluss eines Kühlmittels durch das DEH-Stromkabel/den Stromversorgungsschlauch bereitgestellt ist, um die elektrischen Kabel und ihr Isoliermaterial von einem kritischen Temperaturwert von etwa 90 °C zusätzlich herunterzukühlen.

8. DEH-Stromkabel, oder Stromversorgungsschlauch, nach Anspruch 7, **dadurch gekennzeichnet, dass** die Kanäle weiterhin Spalten, Schlitze oder beliebige Öffnungen einschließen, die sich quer und/oder längs in dem DEH-Stromkabel/Stromversorgungsschlauch erstrecken, wobei die Kanäle, Spalten und Schlitze das Fluten der Innenräume des DEH-Stromkabels/Stromversorgungsschlauchs ermöglichen, welches Fluten Wärmeübertragung aus dem elektrischen Kabel zu dem Kühlmittel zum Evakuieren der Wärme ermöglicht.

9. DEH-Stromkabel, oder Stromversorgungsschlauch, nach Anspruch 7, **dadurch gekennzeichnet, dass** die mindestens einen sich längs erstreckenden Kanäle in einem Gefäß an einem Versorgungsschlauch-Abhängepunkt enden, der Kühlmittelrohre aufweist, die sich zum Übertragen des Mittels unter Druck an die Kanäle anschließen.

10. DEH-Stromkabel, oder Stromversorgungsschlauch, nach Anspruch 7, **dadurch gekennzeichnet, dass** der mindestens eine sich längs erstreckende Kanal mit Abflusslöchern durch die Außenhülle und kommunizierend mit den Kanälen, die das Kühlmittel ins Meer überführen, bereitgestellt ist.

11. DEH-Stromkabel, oder Stromversorgungsschlauch, nach Anspruch 7, **dadurch gekennzeichnet, dass** das Kühlmittel Wasser ist.

12. DEH-Stromkabel, oder Stromversorgungsschlauch, nach Anspruch 7, **dadurch gekennzeichnet, dass** die Kühllänge des DEH-Stromkabels/Stromversorgungsschlauchs sich über eine Länge von 50 - 200 m erstreckt, wobei sich eine wesentliche Länge von dem Versorgungsschlauch-Abhängepunkt bis zur Meeresoberfläche im Freien befindet.

13. DEH-Stromkabel, oder Stromversorgungsschlauch, nach Anspruch 7, **dadurch gekennzeichnet, dass** das Stromkabel / der Stromversorgungsschlauch mindestens ein Fluidrohr im Querschnitt aus Metall- und /oder Kunststoffmaterial aufweist.

## Revendications

1. Câble DEH (1), ou ombilical de puissance, comprenant :
plusieurs câbles électriques pour le transfert de grandes quantités de puissance/énergie électrique ;
un matériau de remplissage sous la forme d'éléments polymères rigides allongés (6, 7, 8) disposés au moins partiellement autour et entre les plusieurs câbles électriques, les plusieurs câbles électriques et les éléments polymères rigides allongés (6, 7, 8) étant rassemblés en un faisceau torsadé au moyen d'une opération de pose ;
une gaine de protection (10) qui englobe les câbles électriques et le matériau de remplissage ; et
au moins un élément porteur de charge (3) à un emplacement prédéterminé dans la section transversale du câble de puissance DEH/ombilical de puissance (1),
les plusieurs câbles électriques, les éléments polymères rigides allongés et le au moins un élément porteur de charge, sont disposés soit en hélice continue, soit alternativement dans une direction variable en continu, dans tout ou partie de l'extension longitudinale du câble électrique DEH/ombilical de puissance pour former un faisceau, et
**caractérisé en ce que** chaque élément de remplissage polymère allongé rigide (6, 7, 8) est fabriqué à partir dudit matériau polymère, lequel matériau polymère s'est vu ajouter au moins un constituant qui transforme le matériau de remplissage pour qu'il soit sensiblement plus conducteur de chaleur et dissipateur de chaleur.

2. Câble de puissance DEH, ou ombilical de puissance, selon la revendication 1,
**caractérisé en ce que** le matériau de remplissage polymère de base est soit du polyéthylène (PE), du polychlorure de vinyle (PVC), du polypropylène (PP) et de l'acrylonitrile-butadiène-styrène (ABS).

3. Câble de puissance DEH, ou ombilical de puissance, selon la revendication 1 ou 2,
**caractérisé en ce que** le constituant ajouté est du nitrure de bore, dans la plage de 1 à 40 % en poids.

4. Câble de puissance DEH, ou ombilical de puissance, selon la revendication 1 ou 2,
**caractérisé en ce que** le constituant ajouté est du nitrure d'aluminium, dans la plage de 1 à 40 % en poids.

5. Câble de puissance DEH, ou ombilical de puissance, selon l'une quelconque des revendications 1 à 4,
**caractérisé en ce que** le constituant ajouté est des nanotubes de carbone, dans la plage de 1 à 3 % en poids.

6. Câble de puissance DEH, ou ombilical de puissance, selon l'une quelconque des revendications précédentes,
**caractérisé en ce que** le matériau de remplissage et le constituant ajouté sont mélangés en continu et incorporés dans le câble de puissance DEH (1) ou dans un ombilical de puissance pendant la production de celui-ci.

7. Câble de puissance DEH, ou ombilical de puissance, selon l'une quelconque des revendications 1 à 6,
**caractérisé en ce qu'**au moins un canal s'étendant longitudinalement est prévu pour le transport par écoulement forcé d'un agent de refroidissement à travers le câble de puissance DEH/l'ombilical de puissance afin de refroidir davantage les câbles électriques et leur matériau d'isolation à partir d'une valeur de température critique d'environ 90°C.

8. Câble de puissance DEH, ou ombilical de puissance, selon la revendication 7,
**caractérisé en ce que** les canaux comprennent en outre des interstices, des fentes ou des ouvertures quelconques, s'étendant transversalement et/ou longitudinalement dans ledit câble de puissance DEH/ ombilical de puissance, lesdits canaux, interstices et fentes permettent l'inondation des intérieurs dudit câble de puissance DEH/ombilical de puissance dont l'inondation permet un transfert de chaleur depuis les câbles électriques vers l'agent de refroidissement pour l'évacuation de ladite chaleur.

9. Câble de puissance DEH, ou ombilical de puissance, selon la revendication 1,
**caractérisé en ce que** le au moins un canal s'étendant longitudinalement se termine par un récipient au niveau d'un point d'accrochage d'ombilical comprenant des tubes d'agent de refroidissement se connectant auxdits canaux pour le transfert dudit agent sous pression.

10. Câble de puissance DEH, ou ombilical de puissance, selon la revendication 1,
**caractérisé en ce que** le au moins un canal s'étendant longitudinalement est muni de trous de drainage à travers la gaine externe et communiquant avec lesdits canaux, qui communiquent l'agent de refroidissement dans la mer.

11. Câble de puissance DEH, ou ombilical de puissance, selon la revendication 1,
**caractérisé en ce que** l'agent de refroidissement est de l'eau.

12. Câble de puissance DEH, ou ombilical de puissance, selon la revendication 1,
**caractérisé en ce que** la longueur de refroidissement du câble de puissance DEH/ombilical de puissance s'étend sur une longueur de 50 à 200 mètres, où une longueur cruciale est à l'air libre depuis le point d'accrochage d'ombilical jusqu'à la surface de la mer.

13. Câble de puissance DEH, ou ombilical de puissance, selon la revendication 1,
**caractérisé en ce que** le câble de puissance DEH /l'ombilical de puissance comprend au moins une conduite de fluide dans la section transversale, en métal et/ou en matière plastique.
